(19) Europäisches Patentamt / European Patent Office / Office européen des brevets

(11) **EP 2 486 064 B1**

(12) **FASCICULE DE BREVET EUROPEEN**

(45) Date de publication et mention de la délivrance du brevet:
**25.05.2022 Bulletin 2022/21**

(21) Numéro de dépôt: **10782343.7**

(22) Date de dépôt: **11.10.2010**

(51) Classification Internationale des Brevets (IPC):
**C08B 31/04** (2006.01)

(52) Classification Coopérative des Brevets (CPC):
**C08B 31/04**

(86) Numéro de dépôt international:
**PCT/FR2010/052147**

(87) Numéro de publication internationale:
**WO 2011/042677 (14.04.2011 Gazette 2011/15)**

(54) **PROCEDE DE PREPARATION DE DERIVES ACETYLES DE MATIERE AMYLACEE**

VERFAHREN ZUR HERSTELLUNG ACETYLIERTER DERIVATE EINES STÄRKEHALTIGEN MATERIALS

METHOD FOR PREPARING ACETYLATED DERIVATIVES OF AN AMYLACEOUS MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2009 FR 0957083**

(43) Date de publication de la demande:
**15.08.2012 Bulletin 2012/33**

(73) Titulaire: **Roquette Frères**
**62136 Lestrem (FR)**

(72) Inventeur: **QUETTIER, Claude**
**F-59130 Lambersart (FR)**

(74) Mandataire: **Plasseraud IP**
**66, rue de la Chaussée d'Antin**
**75440 Paris Cedex 09 (FR)**

(56) Documents cités:
EP-A2- 0 859 012  WO-A1-97/02018
WO-A1-97/03121  WO-A1-2004/104048
WO-A1-2007/065681  WO-A1-2011/135055
DE-A1- 4 213 282  DE-A1- 19 827 312
FR-A- 1 131 939  GB-A- 190 209 868
US-A- 2 362 282  US-A- 3 549 619
US-A- 3 553 196  US-A- 3 795 670
US-A- 5 367 067  US-A- 5 714 601

- DATABASE WPI Week 200555 Thomson Scientific, London, GB; AN 2005-536464 XP002583807, -& JP 2005 194412 A (GUNEI KAGAKU KOGYO KK) 21 juillet 2005 (2005-07-21)
- Ossi Korhonen ET AL: "Effects of physical properties for starch acetate powders on tableting", AAPS PharmSciTech, 1 January 2002 (2002-01-01), page E34, XP055504905, United States Retrieved from the Internet: URL:https://link.springer.com/content/pdf/ 10.1208/pt030434.pdf

**Description**

La présente invention concerne un procédé continu de préparation de dérivés acétylés de matière amylacée tel que décrit dans les revendications.

L'amidon est un mélange de 2 polymères, l'amylose et l'amylopectine, composés d'unités D-glucoses reliées entre elles par des liaisons $\alpha$ (1-4) et $\alpha$ (1-6), ces dernières étant responsables des ramifications dans la structure de la molécule. L'amylose est un polymère de glucose relativement linéaire, tandis que l'amylopectine est un polymère ramifié. Le rapport entre les quantités des deux types de polymères dépend de la source de l'amidon.

Les dérivés acétylés de matière amylacée sont utilisés dans divers domaines, notamment dans des produits alimentaires, des produits pharmaceutiques, des fibres, des filaments, et des thermoplastiques. Leurs propriétés physiques et fonctionnelles dépendent notamment de leur degré de substitution en groupements acétyles (DS). Par « degré de substitution en groupements acétylés » (DS), on entend dans la présente invention le nombre moyen de groupement acétyles par unité glucose constituant la matière amylacée.

La solubilisation des dérivés acétylés de matière amylacée est notamment fonction de leur DS. Ainsi, les dérivés amylacés faiblement acétylés ne sont pas solubles dans des solvants tels que l'acide acétique.

Les procédés de préparation de dérivés acétylés de matière amylacée incluent classiquement l'estérification de tout ou partie des groupements hydroxyles libres de l'amidon par de l'acide ou de l'anhydride acétique.

En début de l'étape d'estérification, les dérivés amylacés présentent un DS nul ou faible et se trouvent alors en suspension dans un solvant. Au sens de la présente invention, on entend par « suspension » toute dispersion hétérogène de dérivés acétylés de matière amylacée à l'état granulaire dans un solvant. Au cours de l'étape d'estérification, le DS desdits dérivés amylacés augmente. Au-delà d'un DS seuil, les dérivés acétylés amylacés deviennent alors solubles dans des solvants tels que l'anhydride acétique et/ou l'acide acétique. Il en résulte une solution homogène visqueuse appelée « phase colle ». Au sens de la présente invention, on entend par « phase colle » ou « colle de matière amylacée » toute solution homogène d'acétate d'amidon dans un solvant, ledit solvant étant préférentiellement de l'anhydride acétique et/ou de l'acide acétique.

L'étape d'estérification est suivie d'une étape de récupération des dérivés acétylés.

Cette étape de récupération des dérivés acétylés se fait classiquement par précipitation dans l'eau ou un autre solvant. A titre d'exemple, le brevet US 4 501 888 décrit un procédé d'obtention de dérivés acétylés d'amidon impliquant l'estérification de l'amidon par de l'anhydride acétique, dans lequel la récupération de l'ester se fait par précipitation dans l'eau.

La précipitation des dérivés acétylés produit un effluent riche en acide acétique comprenant en outre d'autres espèces, notamment le solvant dans lequel est effectuée la précipitation. L'acide acétique ne peut être récupéré de l'effluent qu'après plusieurs opérations, par exemple après une triple opération de distillation. De plus, l'utilisation de solvants souvent coûteux ou toxiques dans l'étape de précipitation génère un coût élevé, tant économique qu'environnemental, pour la fabrication des dérivés acétylés des matières amylacées et est susceptible de laisser des traces de substances nocives dans les produits finaux.

La substitution de l'étape de précipitation par une étape d'évaporation dans un procédé de préparation de dérivés acétylés de matière amylacée permet de produire des effluents plus riches en acide acétique. L'acide acétique est plus facilement récupéré à partir de l'effluent, et donc plus facilement recyclé.

L'évaporation partielle de l'acide acétique dans un procédé de préparation de dérivés acétylés de matière amylacée consiste donc en une alternative très avantageuse à la précipitation.

A titre d'exemple, la demande de brevet WO 2004/104048 décrit un procédé d'obtention de dérivés acétylés d'amidon impliquant l'estérification de l'amidon par une association acide acétique et sel de bétaïne, dans lequel la récupération de l'ester se fait par distillation partielle puis précipitation dans l'éthanol. L'acétate d'amidon décrit dans se document présente un DS faible, très inférieur à 1. L'acétate d'amidon est donc en suspension dans le mélange acide acétique / sel de bétaïne. Dans une suspension de dérivés acétylés amylacés, la distillation, même quasi-totale de l'acide acétique ne pose pas de problème particulier à l'homme du métier.

Outre le demande WO 2004/104048, une telle distillation d'une suspension de dérivés acétylés amylacés est également décrite dans les documents WO 2007/065681, GB 09868 A A.D. 1902, US 2 362 282.

Cependant, lorsque les dérivés acétylés amylacés présente un DS élevé, l'évaporation quasi-totale de l'acide acétique piégé dans la phase colle n'a, à la connaissance de la Demanderesse, jusqu'alors jamais pu être réalisée dans un procédé continu de préparation de dérivés acétylés de matière amylacée. Ainsi, la substitution de l'étape de précipitation par une seule étape d'évaporation dans un procédé continu de préparation de dérivés acétylés de matière amylacée n'a jusqu'à présent jamais permis d'obtenir lesdits dérivés acétylés sous forme solide, à l'état de poudre.

A titre d'exemple, le document WO 97/02018 décrit un procédé d'acétylation-succinylation d'amidon dans de l'acide acétique glacial et d'anhydride acétique. A l'issue de l'estérification, qui conduit à la préparation d'un dérivé acétylé amylacé de DS élevé (DS supérieur à 2), l'acide acétique en excès est évaporé sous vide. Cependant, il s'agit ici d'une distillation partielle qui ne permet pas la récupération finale d'un dérivé acétylé amylacé sous forme solide. La distillation partielle est donc suivie d'une étape de précipitation dans l'eau du dérivé amylacé.

Le document WO 97/03121 décrit un procédé d'acétylation d'amidon avec de l'anhydride acétique. L'acide acétique et l'anhydride éventuellement en excès sont évaporés sous vide partiel, puis l'acide acétique résiduel est retiré par entraînement d'azote apporté par barbotage. Ici encore, le dérivé acétylé amylacé n'est pas récupéré sous la forme d'une poudre solide mais dans un mélange avec des esters de glycérol et d'acide acétique, de telle manière que ledit mélange présente une consistance liquide, apte au barbotage d'azote.

De tout ce qui précède, il résulte qu'il existe un besoin non satisfait de disposer d'un procédé de préparation de dérivés acétylés de matière amylacée de DS au moins supérieur ou égal à 1,6 exempt de toute étape de précipitation et tel qu'une seule étape d'évaporation de l'acide acétique conduise à la récupération sous forme d'une poudre solide desdits dérivés acétylés de matière amylacée de haut DS.

La présente invention concerne un procédé continu de préparation de dérivés acétylés de matière amylacée incluant une étape d'évaporation en lieu et place de l'étape de précipitation décrite dans les procédés classiques. Cette substitution permet une amélioration des enjeux technique, économique et environnemental du procédé, et favorise ainsi sa mise en œuvre au niveau industriel.

Présentation détaillée de l'invention

Le premier objet de la présente invention est un procédé continu de préparation d'une composition solide d'un dérivé acétylé de matière amylacée comprenant les étapes suivantes :

a) une étape de réaction d'acétylation de la matière amylacée par de l'anhydride acétique et/ou de l'acide acétique en présence d'un catalyseur pour obtenir un milieu réactionnel sous la forme d'une colle de matière amylacée acétylée, dans laquelle le catalyseur est l'acide méthane sulfonique ou l'acétate de sodium,
b) une étape de neutralisation dudit catalyseur,
c) une étape d'évaporation du milieu réactionnel notamment en vue de solidifier ledit milieu réactionnel, et
d) une étape de récupération du milieu réactionnel ainsi appauvri en acide acétique et solidifié.

Au cours de ces recherches, la Demanderesse a constaté que le DS seuil au-delà duquel les dérivés acétylés de matière amylacée sont solubles dans l'acide et/ou l'anhydride acétique correspond à un DS au moins supérieur à 1,6 (borne incluse).

Par « matière amylacée » au sens de la présente invention, on entend notamment les amidons granulaires, les amidons hydrosolubles et les amidons organomodifiés.

Selon une première variante, l'amidon sélectionné comme matière amylacée est un amidon granulaire. On entend ici par « amidon granulaire », un amidon natif ou modifié physiquement, chimiquement ou par voie enzymatique, ayant conservé, au sein des granules d'amidon, une structure semi-cristalline similaire à celle mise en évidence dans les grains d'amidon présents naturellement dans les organes et tissus de réserve des végétaux supérieurs, en particulier dans les graines de céréales, les graines de légumineuses, les tubercules de pomme de terre ou de manioc, les racines, les bulbes, les tiges et les fruits. Cet état semi-cristallin est essentiellement dû aux macromolécules d'amylopectine, l'un des deux constituants principaux de l'amidon. A l'état natif, les grains d'amidon présentent un taux de cristallinité qui varie de 15 à 45 %, et qui dépend essentiellement de l'origine botanique de l'amidon et du traitement éventuel qu'il a subi. L'amidon granulaire, placé sous lumière polarisée, présente une croix noire caractéristique, dite croix de Malte, typique de l'état granulaire.

Selon l'invention, l'amidon granulaire peut provenir de toutes origines botaniques, y compris un amidon granulaire riche en amylose ou, inversement, riche en amylopectine (waxy). Il peut s'agir d'amidon natif de céréales telles que le blé, le maïs, l'orge, le triticale, le sorgo ou le riz, de tubercules tels que la pomme de terre ou le manioc, ou de légumineuses telles que le pois, et de mélanges de tels amidons.

L'amidon granulaire peut être un amidon hydrolysé par voie acide, oxydante ou enzymatique, ou un amidon oxydé. Il peut s'agir d'un amidon communément appelé amidon fluidifié ou d'une dextrine blanche.

Il peut s'agir également d'un amidon modifié par voie physico-chimique mais ayant essentiellement conservé la structure de l'amidon natif de départ, comme notamment les amidons estérifiés et/ou éthérifiés, en particulier modifiés par acétylation, hydroxypropylation, cationisation, réticulation, phosphatation, ou succinylation, ou les amidons traités en milieu aqueux à basse température (en anglais « *annealing* »). De préférence, l'amidon granulaire est un amidon natif, hydrolysé, oxydé ou modifié, en particulier de maïs, de blé, de pomme de terre ou de pois.

L'amidon granulaire présente généralement un taux de solubles à 20°C dans l'eau déminéralisée inférieur à 5 % en masse. Il est de préférence quasiment insoluble dans l'eau froide.

Selon une seconde variante, l'amidon sélectionné comme matière amylacée est un amidon hydrosoluble, pouvant provenir aussi de toutes origines botaniques, y compris un amidon, hydrosoluble, riche en amylose ou, inversement, riche en amylopectine (waxy). Cet amidon hydrosoluble peut être introduit en remplacement partiel ou total de l'amidon granulaire.

On entend au sens de l'invention par « amidon hydrosoluble», toute matière amylacée présentant à 20°C et sous agitation mécanique pendant 24 heures une fraction soluble dans de l'eau déminéralisée au moins égale à 5 % en poids. Cette fraction soluble est de préférence supérieure à 20 % en poids et en particulier supérieure à 50 % en poids. Bien entendu, l'amidon hydrosoluble peut être totalement soluble dans l'eau déminéralisée (fraction soluble = 100 %).

L'amidon hydrosoluble peut être avantageusement utilisé selon l'invention sous forme solide, de préférence avec une faible teneur en eau, généralement inférieure à 10 %, notamment inférieure à 5% en poids, et mieux sous forme solide présentant une teneur en eau inférieure à 2,5 % en poids, y compris sous forme substantiellement anhydre (teneur en eau inférieure à 0,5 %, voire 0,2 %, en poids).

De tels amidons hydrosolubles peuvent être obtenus par prégélatinisation sur tambour, par prégélatinisation sur extrudeuse, par atomisation d'une suspension ou d'une solution amylacée, par précipitation par un non-solvant, par cuisson hydro-thermique, par fonctionnalisation chimique ou autre. Il s'agit en particulier d'un amidon prégélatinisé, extrudé ou atomisé, d'une dextrine hautement transformée (appelée aussi dextrine jaune), d'une maltodextrine, d'un amidon fonctionnalisé ou d'un mélange quelconque des ces produits.

Les amidons prégélatinisés peuvent être obtenus par traitement hydro-thermique de gélatinisation d'amidons natifs ou d'amidons modifiés, en particulier par cuisson vapeur, cuisson jet-cooker, cuisson sur tambour, cuisson dans des systèmes de malaxeur/extrudeur puis séchage par exemple en étuve, par air chaud sur lit fluidisé, sur tambour rotatif, par atomisation, par extrusion ou par lyophilisation. De tels amidons présentent généralement une solubilité dans l'eau déminéralisée à 20°C supérieure à 5 % et plus généralement comprise entre 10 et 100 % et un taux de cristallinité en amidon inférieur à 15 %, généralement inférieur à 5 % et le plus souvent inférieur à 1 %, voire nul. A titre d'exemple, on peut citer les produits fabriqués et commercialisés par la Demanderesse sous le nom de marque PREGEFLO®.

L'amidon hydrosoluble peut également consister en un amidon qui a conservé sa structure granulaire, obtenu par cuisson atomisation, généralement connu sous l'appellation d'amidon GCWS (Granular Cold Water Soluble).

Les dextrines hautement transformées peuvent être préparées à partir d'amidons natifs ou modifiés, par dextrinification en milieu acide peu hydraté. Il peut s'agir en particulier de dextrines blanches solubles ou de dextrines jaunes. A titre d'exemple, on peut citer les produits STABILYS® A 053 ou TACKIDEX® C 072 fabriqués et commercialisés par la Demanderesse. De telles dextrines présentent dans l'eau déminéralisée à 20°C une solubilité comprise généralement entre 10 et 95 % et une cristallinité en amidon inférieure à 15 % et généralement inférieure à 5 %.

Les maltodextrines peuvent être obtenues par hydrolyse acide, oxydante ou enzymatique d'amidons en milieu aqueux. Elles peuvent présenter en particulier un dextrose équivalent (DE) compris entre 0,5 et 40, de préférence entre 0,5 et 20 et mieux encore entre 0,5 et 12. De telles maltodextrines sont par exemple fabriquées et commercialisées par la Demanderesse sous l'appellation commerciale GLUCIDEX® et présentent une solubilité dans l'eau déminéralisée à 20°C généralement supérieure à 90 %, voire proche de 100 %, et une cristallinité en amidon généralement inférieure à 5 % et d'ordinaire quasiment nulle. De préférence, les réactifs de modification ou de fonctionnalisation de l'amidon sont d'origine renouvelable.

Selon une autre variante avantageuse, l'amidon hydrosoluble est un amidon hydrosoluble de maïs, de blé, de pomme de terre ou de pois ou un dérivé hydrosoluble de ceux-ci.

De plus, il présente avantageusement une faible teneur en eau, généralement inférieure à 10 %, de préférence inférieure à 5 %, en particulier inférieure à 2,5 % en poids et idéalement inférieure à 0,5 %, voire inférieure à 0,2 % en poids.

Selon une troisième variante, la matière amylacée sélectionnée utilisée selon l'invention est un amidon organomodifié, de préférence organosoluble, pouvant provenir aussi de toutes origines botaniques, y compris un amidon organomodifié, de préférence organosoluble, riche en amylose ou, inversement, riche en amylopectine (waxy). Cet amidon organosoluble peut être introduit en remplacement partiel ou total de l'amidon granulaire ou de l'amidon hydrosoluble.

On entend au sens de l'invention par « amidon organomodifié » tout composant amylacé autre qu'un amidon granulaire ou un amidon hydrosoluble selon les définitions données ci-avant. De préférence, cet amidon organomodifié est quasiment amorphe, c'est-à-dire présente un taux de cristallinité en amidon inférieur à 5 %, généralement inférieur à 1 % et notamment nul. Il est aussi de préférence « organosoluble », c'est-à-dire présente à 20°C une fraction soluble dans un solvant choisi parmi l'éthanol, l'acétate d'éthyle, l'acétate de propyle, l'acétate de butyle, le carbonate de diéthyle, le carbonate de propylène, le glutarate de diméthyle, le citrate de triéthyle, les esters dibasiques, le diméthylsulfoxide (DMSO), le diméthylisosorbide, le triacétate de glycérol, le diacétate d'isosorbide, le dioléate d'isosorbide et les esters méthyliques d'huiles végétales, au moins égale à 5 % en poids. Cette fraction soluble est de préférence supérieure à 20 % en poids et en particulier supérieure à 50 % en poids. Bien entendu, l'amidon organosoluble peut être totalement soluble dans l'un ou plusieurs des solvants indiqués ci-dessus (fraction soluble = 100 %).

L'amidon organomodifié peut être utilisé selon l'invention sous forme solide, y compris présentant une teneur en eau peu élevée, à savoir inférieure à 10 % en poids. Elle peut notamment être inférieure à 5 %, en particulier inférieure à 2,5 % en poids et idéalement inférieure à 0,5 %, voire inférieure à 0,2 % en poids.

L'amidon organomodifié utilisable selon l'invention peut être préparé par une haute fonctionnalisation des amidons natifs ou modifiés tels que ceux présentés ci-avant. Cette haute fonctionnalisation peut par exemple être réalisée par estérification ou éthérification à un niveau suffisamment élevé pour le rendre essentiellement amorphe et pour lui conférer une insolubilité dans l'eau et de préférence une solubilité dans l'un des solvants organiques ci-dessus. De tels amidons fonctionnalisés présentent une fraction soluble telle que définie ci-dessus supérieure à 5 %, de préférence supérieure à 10 %, mieux encore supérieure à 50 %.

La haute fonctionnalisation peut s'obtenir en particulier par greffage par exemple en phase solvant ou par extrusion réactive, d'anhydrides d'acides, d'anhydrides mixtes, de chlorures d'acides gras, d'oligomères de caprolactones ou de lactides, hydroxypropylation et réticulation en phase colle, cationisation et réticulation en phase sèche ou en phase colle, anionisation par phosphatation ou succinylation et réticulation en phase sèche ou en phase colle, silylation, télomérisation au butadiène.

Selon une autre variante avantageuse, l'amidon organomodifié est un amidon organomodifié de maïs, de blé, de pomme de terre ou de pois ou un dérivé organomodifié de ceux-ci.

## Description détaillée des étapes du procédé selon l'invention

### • *Etape a)*

L'étape a) correspond à l'acétylation de la matière amylacée par de l'anhydride acétique et/ou de l'acide acétique. Cette étape est réalisée en présence d'un catalyseur de la réaction d'acétylation de manière à obtenir un DS compris entre 1,6 et 3 (bornes incluses), préférentiellement entre 2 et 3, plus préférentiellement entre 2,3 et 3, et plus préférentiellement encore entre 2,5 et 3. Ainsi, à l'issue de l'étape a), l'acétate d'amidon se trouve en phase colle.

Le catalyseur impliqué dans l'étape a) est l'acide méthane sulfonique ou l'acétate de sodium.

Les proportions des réactifs impliqués dans l'étape a) dépendent du degré de substitution en groupements acétyles DS désiré pour l'ester.

L'étape a) est réalisée en présence de n équivalents d'anhydride (ou d'acide) acétique par rapport à la quantité de matière amylacée, pour obtenir un DS compris entre 1,6 et 3 (bornes incluses), préférentiellement entre 2 et 3, plus préférentiellement entre 2,3 et 3, et plus préférentiellement encore entre 2,5 et 3. Ainsi, à l'issue de l'étape a), l'acétate d'amidon se trouve en phase colle.

De plus, l'étape a) est réalisée dans l'une des, de préférence toutes les, conditions suivantes :

- en présence de 0,0002 à 0,50 équivalent molaire de catalyseur par rapport à la quantité de matière amylacée calculée en mole d'anhydroglucose;
- à une température de consigne comprise entre 80 et 135°C, pour une réaction à pression atmosphérique (réacteur ouvert) ;
- pendant une durée allant de 5 secondes à 10 heures à partir du moment où la température de consigne est atteinte.

Par ailleurs, les quantités précisées ci-dessus correspondent à la situation où la matière amylacée est totalement anhydre. Dans le cas où elle comprend un pourcentage d'eau non nul, celui-ci doit être pris en compte pour le calcul des quantités impliquées, en particulier dans la mesure où l'eau va hydrolyser une partie de l'anhydride acétique. Connaissant la proportion d'eau dans l'amidon, l'homme du métier est à même d'adapter les quantités de chaque réactif pour compenser la présence de l'eau.

L'homme du métier est à même de modifier les intervalles de température décrits dans la présente invention pour une pression donnée pour reproduire des conditions similaires dans des conditions de pression différentes.

### • *Etape b)*

L'étape b) correspond à la neutralisation du catalyseur. Le catalyseur acide mis en œuvre lors de l'étape a), est neutralisé pour éviter ou limiter toute dégradation ultérieure de la matière amylacée acétylée, en particulier lors de l'étape c) d'évaporation.

La neutralisation du catalyseur peut être réalisée notamment en ajoutant au milieu réactionnel une quantité légèrement inférieure à la stœchiométrique ou légèrement supérieure à la stœchiométrie d'un composé basique.

De préférence, l'étape b) est réalisée dans l'une des, de préférence toutes les, conditions suivantes :

- en présence d'une quantité supérieure ou égale à 0,8équivalents molaires de réactif de neutralisation, préférentiellement une quantité de 1,0 à 1,2 équivalent molaire de réactif de neutralisation (par exemple l'acétate de sodium quand le catalyseur est l'acide méthane sulfonique) par rapport à la quantité de catalyseur;
- dans les mêmes conditions de température et de pression que l'étape a) ;

- pendant une durée allant de 30 secondes à 10 heures à partir du moment où le réactif de neutralisation est ajouté, dépendant de la viscosité du milieu et de la capacité à obtenir une dispersion homogène.

Les étapes a) et b) sont réalisées dans des réacteurs thermostatés disposant d'un système d'agitation permettant d'éviter la formation de zones mortes, c'est-à-dire peu ou pas agitées.

Selon un mode préféré de la présente invention, au moins deux réacteurs thermostatés sont utilisés en alternance pour la réalisation du procédé continu de préparation de dérivés acétylés de matière amylacée de telle sorte que le ou les réacteur(s) malaxeur(s) évaporateur(s) utilisé(s) à l'étape c) soi(en)t alimenté(s) en continu.

• *Etape c)*

L'étape c) correspond à l'évaporation du milieu réactionnel. Cette étape est réalisée dans un ou des réacteur(s) malaxeur(s) évaporateur(s) alimentés en continu et tel(s) que décrit(s) en détails ci-après. Il s'agit de l'étape clé du procédé puisqu'elle permet d'éliminer tout ou partie de l'acide acétique présent dans le milieu réactionnel qui est, à l'issue de l'étape b), une colle de matière amylacée acétylée. L'acide acétique est présent dans le milieu réactionnel à ce stade du procédé notamment en tant que solvant de la matière amylacée acétylée provenant d'un ajout initial comme solvant ou réactif d'acétylation en excès.

La nature du milieu réactionnel soumis à l'étape c) d'évaporation est importante pour la mise en œuvre de la présente invention. Le milieu réactionnel, éventuellement neutralisé, qui est soumis à l'étape c) se présente sous la forme d'une colle de matière amylacée acétylée dont le DS est compris entre 1,6 et 3 (bornes incluses), préférentiellement entre 2 et 3, plus préférentiellement entre 2,3 et 3, et plus préférentiellement encore entre 2,5 et 3. Ledit milieu réactionnel soumis à l'étape c) présente également avantageusement une proportion de matière sèche supérieure à 10%, de préférence supérieure à 20 %, et plus préférentiellement encore supérieure à 40% en poids du mélange réactionnel total. Par « matière sèche », on entend ici la matière solide restant après évaporation du solvant, ledit solvant étant très majoritairement, voire exclusivement, constitué d'acide acétique et, éventuellement, de traces d'eau ou d'anhydride acétique.

De façon avantageuse, l'évaporation du solvant constitué majoritairement, voire exclusivement, d'acide acétique, se fait sous pression réduite. Lors de cette évaporation, le milieu réactionnel s'appauvrit en solvant jusqu'à devenir de consistance solide. Le milieu réactionnel prend alors une forme poudre à l'issue de l'étape c).

Cet appauvrissement en solvant se déroule dans des conditions de température et de pression telles que l'on se situe en dessous de la température de transition vitreuse du produit en cours de solidification.

L'étape c) peut notamment être réalisée à une pression comprise entre 0,001 et 1 bar, de préférence comprise entre 0,01 et 0,5 bar et plus préférentiellement encore comprise entre 0,02 et 0,25 bar.

De préférence, l'étape c) est réalisée à une température comprise entre 20 et 140°C, préférentiellement entre 20 et 120°C, en particulier dans des conditions de pression telles que décrites ci-dessus.

• *Etape d)*

L'étape d) correspond à la récupération finale et en continu de la composition solide de matière amylacée acétylée résultant de l'étape c), à savoir du milieu réactionnel, neutralisé, appauvri en acide acétique et solidifié.

Au sens de la présente invention, on entend par « appauvri en acide acétique » un milieu réactionnel contenant moins de 10% en poids d'acide acétique, préférentiellement moins de 5% d'acide acétique, plus préférentiellement moins de 2 % et plus préférentiellement encore moins de 1 %.

Au sens de la présente invention, on entend par « milieu réactionnel solidifié » une composition solide de matière amylacée acétylée sous forme poudre.

L'étape d) peut inclure au moins une étape, notamment de broyage, de lavage et/ou de séchage, de la composition solide de matière amylacée acétylée résultant de l'étape c).

**Réacteurs et réacteurs malaxeurs évaporateurs**

Le ou les réacteur(s) utilisé(s) pour mettre en œuvre l'étape a) et l'étape b) du procédé de la présente invention doivent avantageusement disposer d'un système d'agitation permettant d'éviter la formation de zones mortes, c'est-à-dire peu ou pas agitées. De tels dispositifs sont connus en tant que tels, par exemple dans le domaine de la mise en œuvre des polymères.

Bien entendu, l'homme du métier saura choisir la puissance d'agitation appropriée du réacteur en fonction de la viscosité du mélange réactionnel initial afin de prévenir un éventuel blocage du système d'agitation, une prise en masse du mélange réactionnel et finalement l'arrêt de la réaction.

Les réacteurs utilisés pour mettre en œuvre l'étape a) etl'étape b) peuvent être des appareils fonctionnant en discontinu, par lots (batch), comme par exemple les réacteurs munis d'agitateurs à hélice, à hélicoïde, à vis ou à ancre, les mélangeurs horizontaux à rubans ou à pales, les mélangeurs à turbine ou à contre-mouvement, les pétrins et les mélangeurs planétaires, les malaxeurs à pales sigma ou en Z et les malaxeurs internes. De tels mélangeurs utilisables pour un procédé par lots (batch) sont décrits, par exemple, dans l'article de G. Delaplace et de R. Guérin, intitulé « Mélange des produits pâteux-Caractéristiques d'un système agité » (Techniques de l'Ingénieur, 03/2006, F3350), ou dans le chapitre « Mixing of Highly Viscous Media », de D. B. Todd, Ullmann's Encyclopedia of Industrial Chemistry, 6ème édition, 2003, pages 189 - 205.

Selon un mode préféré de la présente invention, au moins deux réacteurs thermostatés sont utilisés en alternance pour la réalisation du procédé continu de préparation de dérivés acétylés de matière amylacée de telle sorte que le ou les réacteur(s) malaxeur(s) évaporateur(s) utilisé(s) à l'étape c) soi(en)t alimenté(s) en continu.

Selon le mode de réalisation avantageux de la présente invention, on utilise, pour mettre en œuvre l'étape c) et, éventuellement, l'étape d) un réacteur malaxeur évaporateur, ledit réacteur malaxeur évaporateur étant un mélangeur horizontal, par exemple un mélangeur cylindrique, monoaxial avec un arbre muni d'au moins deux pales en forme de soc de charrue, tel que ceux commercialisés par la société Lödige. Un tel mélangeur horizontal peut comporter en outre d'autres moyens d'agitation fixés sur l'arbre, par exemple des racleurs, des couteaux ou d'autres formes de pales, éventuellement de structure complexe comme les pales Isomix (R) de la société Lödige. De tels mélangeurs horizontaux à soc de charrue permettent de racler en continu la surface du réacteur cylindrique de manière à limiter ou à éviter la formation de zones mortes. On peut également utiliser des mélangeurs horizontaux mono- ou bi-axiaux, avec des axes portant des moyens d'agitation et de mélange autres que des pales en forme de soc de charrue, par exemple des disques, des barres, des racleurs ou des couteaux. Lorsqu'on utilise des mélangeurs bi-axiaux, les deux arbres peuvent tourner dans le même sens ou en sens opposé. Les mélangeurs horizontaux peuvent également fonctionner en continu lorsqu'ils sont intégrés dans une chaîne de production adaptée.

De tels mélangeurs horizontaux sont commercialisés par exemple par la société List AG et décrits dans les brevets et demandes de brevet US 6 039 469, US 2004/0114460, US 2004/0145964, US 2006/0193197 et EP 1 127 609.

Dans un mode de réalisation particulièrement avantageux, le procédé utilise en mode continu comme réacteur malaxeur évaporateur un mélangeur horizontal monoaxial avec des pales en forme de soc de charrue, ou bien un mélangeur horizontal biaxial à disques et/ou à barres de mélange.

Toute étape intermédiaire de broyage entre les étapes c) et d) du procédé selon l'invention peut être menée dans la même enceinte (malaxeur évaporateur) ou, inversement, dans une enceinte autre que celle dans laquelle a été menée l'étape c).

Le procédé peut également comprendre entre les étapes c) et d) une première étape intermédiaire de broyage menée au sein de la même enceinte (malaxeur évaporateur) que celle dans laquelle a été menée l'étape c), puis au moins une seconde étape intermédiaire de broyage menée dans une enceinte autre que celle dans laquelle a été menée l'étape c).

L'enceinte (malaxeur évaporateur) dans laquelle est menée l'étape c), éventuellement l'étape d) et/ou toute étape intermédiaire de broyage du procédé selon l'invention est avantageusement munie de moyens d'agitation à axe de rotation horizontal, et/ou conçus de manière à racler la paroi de l'enceinte.

Ladite enceinte peut être en particulier une enceinte monoaxiale ou biaxiale munie de pales, notamment en forme de disques ou de soc de charrue, et d'éléments de mélange ou malaxage, notamment sous forme de barres.

## Dérivés et compositions

Le dérivé acétylé de matière amylacée obtenu par le procédé selon l'invention présente avantageusement un degré de substitution en groupements acétyles (DS) compris entre 1,6 et 3 (bornes incluses), préférentiellement entre 2 et 3, plus préférentiellement entre 2,3 et 3, et plus préférentiellement encore entre 2,5 et 3.

La Demanderesse a observé que le procédé selon l'invention permettait d'obtenir des compositions solides d'un dérivé acétylé de matière amylacée présentant des caractéristiques nouvelles et généralement avantageuses en regard de celles présentées par les compositions solides de même nature obtenues selon les procédés classiques ne mettant en œuvre aucune étape c) d'évaporation telle que décrite ci-avant mais plutôt une étape de précipitation dans l'eau ou un autre solvant.

Ces caractéristiques concernent notamment des critères de :

- densité (densité aérée et/ou densité tassée),
- tassement,
- écoulement,
- angle de talus et/ou de chute,
- surface spécifique.

Selon un mode particulier de l'invention, la composition solide de dérivé acétylé de matière amylacée issue du procédé présente :

- une densité aérée supérieure à 0,4, de préférence supérieure à 0,45 et/ou
- une densité tassée supérieure à 0,5, de préférence supérieure à 0,55.

Plus préférentiellement, la composition solide de dérivé acétylé de matière amylacée selon l'invention présente un degré de substitution en groupements acétyle (DS) supérieur à 1,6 et:

- une densité aérée comprise entre 0,4 et 0,8, préférentiellement comprise entre 0,45 et 0,8, plus préférentiellement encore comprise entre 0,55 et 0,7, et/ou
- une densité tassée comprise entre 0,5 et 0,9, préférentiellement comprise entre 0,55 et 0,85, plus préférentiellement encore comprise entre 0,6 et 0,8.

Le dérivé acétylé de matière amylacée obtenu par le procédé selon l'invention est une composition solide d'un dérivé acétylé de matière amylacée présentant un degré de substitution en groupements acétyle (DS) compris entre 2,5 et 3 et une densité aérée supérieure à 0,4, de préférence supérieure à 0,45 et/ou une densité tassée supérieure à 0,5, de préférence supérieure à 0,55.

Ces densités aérée *(« Aerated Bulk Density »)* et tassée *(« Packed Bulk Density »)* sont mesurées sur le dispositif dénommé « *POWDER CHARACTERISTICS TESTER* » commercialisé par HOSOKAWA IRON WORKS, LTD. selon le protocole décrit dans le manuel d'utilisation fourni avec ledit dispositif.

Ces densités sont généralement supérieures à celles observées pour des compositions solides de même nature obtenues selon les procédés classiques ne mettant en œuvre aucune étape c) d'évaporation telle que décrite ci-avant mais plutôt une étape de précipitation dans l'eau ou un autre solvant. D'où une amélioration des conditions d'utilisation, notamment de transport, manipulation, dosage et conditionnement des compositions selon l'invention par rapport à celles de l'art antérieur.

Selon un mode particulier, la composition solide de dérivé acétylé de matière amylacée issue du procédé selon l'invention présente une surface spécifique comprise entre 0,1 et 1,0 m$^2$/g, préférentiellement comprise entre 0,2 et 0,9 m$^2$/g, plus préférentiellement encore comprise entre 0,2 et 0,8 m$^2$/g.

On détermine la surface spécifique d'un produit grâce à un analyseur de surface spécifique de marque BECKMAN-COULTER, de type SA3100 basé sur un test d'absorption de l'azote gazeux sur la surface spécifique du produit soumis à l'analyse, en suivant la technique décrite dans l'article BET Surface Area by Nitrogen Absorption de S. BRUNAUER et al. (Journal of American Chemical Society, 60, 309, 1938). L'analyse BET est réalisée à basse température (dans un bain d'azote liquide) et en 3 points.

Selon un mode particulier, la composition solide de dérivé acétylé de matière amylacée issue du procédé selon l'invention présente une durée d'écoulement, évaluée selon un test A, comprise entre 2 et 10 secondes, préférentiellement comprise entre 2 et 8 secondes, plus préférentiellement encore comprise entre 3 et 7 secondes.

Le test A consiste en un test normé décrit dans l'ouvrage Pharmacopée Européenne, Cinquième édition, tome 1, pp. 257-258, « 2.9.16. Ecoulement ». Brièvement, le test A est destiné à déterminer, dans des conditions définies, l'aptitude des solides divisés à s'écouler verticalement. L'appareillage utilisé consiste en un entonnoir d'angle 60°C et de diamètre 125 mm tel que décrit à la Figure 2.9.19-2 de la Pharmacopée Européenne. L'entonnoir sec est maintenu verticalement et son orifice d'écoulement est obturé à l'aide d'un moyen approprié. On introduit sans la tasser une prise d'essai de 100g de produit. On libère ensuite l'orifice d'écoulement et on mesure le temps d'écoulement de la totalité de la prise d'essai. On effectue trois mesures différentes. L'aptitude à l'écoulement est exprimée en secondes par rapport à 100g de prise d'essai.

Selon un mode particulier, la composition solide de dérivé acétylé de matière amylacée issue du procédé selon l'invention, de granulométrie comprise entre 100 et 500 $\mu$m, présente un tassement compris entre 2 et 12%, préférentiellement compris entre 3 et 11%, plus préférentiellement encore compris entre 5 et 11%.

Le tassement est calculé à partir des densités aérée et tassée, mesurées sur le dispositif dénommé « *POWDER CHARACTERISTICS TESTER* » commercialisé par HOSOKAWA IRON WORKS, LTD. comme décrit précédemment, selon la formule suivant :

$$\text{Tassement (\%)} = [(\text{masse volumique tassée} - \text{masse volumique aérée}) \ / \ \text{masse volumique aérée}] \times 100$$

Selon un mode particulier, la composition solide de dérivé acétylé de matière amylacée issue du procédé selon l'invention, de granulométrie comprise entre 100 et 500 $\mu$m, présente un angle de talus compris entre 30 et 50°, préférentiellement compris entre 35 et 45°.

Selon un mode particulier, la composition solide de dérivé acétylé de matière amylacée issue du procédé selon l'invention, de granulométrie comprise entre 100 et 500 $\mu$m, présente un angle de chute compris entre 15 et 40°, préférentiellement compris entre 25 et 35°.

Les angles de talus et de chute sont évalués sur le dispositif « *POWDER CHARACTERISTICS TESTER* » commercialisé par HOSOKAWA IRON WORKS, LTD. selon le protocole décrit dans le manuel d'utilisation fourni avec ledit dispositif.

La coupe granulométrique 100-500 $\mu$m est réalisée en utilisant la tamiseuse de laboratoire VS 1000 commercialisée par la société RETSCH, en suivant la méthode préconisée dans le mode d'emploi de ladite tamiseuse. Pour ce faire, ladite tamiseuse est équipée d'une tour de tamisage constituée de 2 tamis de 20 cm de diamètre dont la maille est respectivement de 500 $\mu$m et 100 $\mu$m (les tamis sont placés de haut en bas, de la maille la plus large jusqu'à la maille la plus étroite). Brièvement, la coupe granulométrique consiste à introduire le produit au sommet de la tour de tamisage et à démarrer la tamiseuse en mode continu, à une amplitude de vibration de 50%, durant 10 minutes. Après un tamisage de 10 minutes, la tamiseuse est arrêtée et la quantité de produit retenue sur le tamis de 100 $\mu$m est récupéré, il correspond à une coupe granulométrique 100-500 $\mu$m.

La composition solide d'un dérivé acétylé de matière amylacée telle que décrite ci-avant et/ou obtenue selon le procédé selon l'invention peut être utilisée pour la préparation d'une composition thermoplastique, élastomérique, pharmaceutique, alimentaire, adhésive et/ou d'une encre.

La composition thermoplastique préparée à partir d'une composition obtenue par le procédé selon l'invention peut en outre comprendre une ou plusieurs autres matières thermoplastiques.

La composition élastomérique préparée à partir d'une composition obtenue par le procédé selon l'invention peut en outre comprendre une ou plusieurs autres matières élastomériques.

La composition pharmaceutique préparée à partir d'une composition obtenue par le procédé selon l'invention peut en outre comprendre un ou plusieurs autres excipients.

La composition adhésive préparée à partir d'une composition obtenue par le procédé selon l'invention peut en outre comprendre une ou plusieurs autres matières adhésives.

On dispose ainsi d'un nouveau moyen permettant de préparer efficacement des dérivés acétylés de matière amylacée, y compris de nouveaux dérivés acétylés de matière amylacée utilisables dans de très nombreux domaines applicatifs.

La Demanderesse considère que ce moyen, en l'occurrence le procédé tel que décrit ci-avant dans toutes ses variantes, est avantageusement applicable, en toutes généralités, à la préparation:

a) de dérivés de matière amylacée autres que des dérivés acétylés et notamment à des dérivés résultant d'une réaction d'estérification autre que l'acétylation. L'agent estérifiant utilisé pour la préparation de tels autres esters de matière amylacée peut alors être un anhydride d'acide organique autre que l'anhydride acétique, un acide organique autre que l'acide acétique, un anhydride mixte, un chlorure d'acide organique ou un mélange quelconque de ces produits. Cet agent d'estérification autre que l'anhydride acétique et/ou l'acide acétique peut être choisi, par exemple, parmi les acides présentant de 1 à 24 carbones, saturés ou insaturés, et plus spécifiquement parmi l'acide formique, l'acide propionique, l'acide butyrique, l'acide valérique, l'acide hexanoïque, l'acide heptanoïque, l'acide pelargonique, l'acide octanoïque, l'acide décanoïque, l'acide undécanoïque, l'acide laurique, l'acide myristique, l'acide palmitique, l'acide oléïque, l'acide stéarique, les anhydrides de ces acides, les anhydrides mixtes de ces acides, et les mélanges quelconques de ces produits, mais aussi

b) de dérivés acétylés ou autres, résultant notamment d'une réaction d'estérification autre que l'acétylation, de polysaccharides autres que les matières amylacées et notamment de dérivés, acétylés ou autres, de cellulose, hémicellulose, chitosans, alginates, gommes xanthane....

Les exemples qui suivent sont fournis à titre illustratif, et non limitatif, de la présente invention.

Sauf indication contraire, les pourcentages dans la présente demande sont exprimés en poids par rapport au poids total de la composition.

Exemples

Exemple 1 : Préparation d'amidon acétylé par un procédé impliquant un LIST CRP et comparaison avec un procédé classique :

*Mise en œuvre :*

| Fécule de pomme de terre : | 1800 g anhydre + 33 g d'eau (humidité 1,8 %) = 1833 g, |
|---|---|
| Anhydride acétique : | 3400 g (3 équivalents, soit 100 % molaire par rapport à l'amidon pour obtenir un DS théorique de 3) + 187 g (excès pour compenser la quantité consommée par l'hydrolyse) = 3587 g, |
| Acide acétique : | 680 g, |
| Catalyseur : | acide méthane sulfonique : 18 g, |
| Masse totale : | 6118 g |

*Réaction*

L'anhydride acétique, l'acide acétique, la fécule de pomme de terre et le catalyseur sont transférés dans un réacteur/malaxeur/évaporateur LIST Co-Rotating-Processor (CRP) 10 Batch, commercialisé par la société LIST SA. La réaction est menée pendant 1 heure 20 mn à 130°C. Pendant cette étape, la fécule de pomme de terre passe d'une suspension hétérogène à un milieu homogène.

Ensuite, 16,33 g d'acétate de sodium en solution dans l'acide acétique sont introduits dans le réacteur pour neutraliser le catalyseur.

Le produit est refroidi à 80°C, la vitesse de rotation est réduite de, respectivement, 50 t/mn et 40 t/mn, à, respectivement, 5 t/mn et 4t/mn pour les deux axes. Le réacteur est mis progressivement sous vide afin de distiller l'acide acétique et les traces résiduelles d'anhydride acétique ; la pression dans le réacteur passe pendant cette étape de la pression atmosphérique à environ 10 mbar.

Une poudre solide est progressivement obtenue. La température est remontée vers 120°C pour terminer l'élimination de l'acide acétique. L'étape de distillation dure 40 minutes environ. 2630 g d'acide acétique sont récupérés au niveau du condenseur, ce qui représente plus de 88 % de la masse théorique de 2970 g. Il est possible d'augmenter le rendement de récupération de l'acide acétique en condensant la sortie de la pompe à vide pour récupérer le reste de l'acide.

Le produit obtenu possède un DS de 2,9 et une absence d'odeur acétique.

A titre de comparaison, le premier exemple décrit dans la demande de brevet WO 97/26281 (HOECHST CELANESE) est détaillé ci-après :

*Mise en œuvre :*

| | | |
|---|---|---|
| | Amidon anhydre : | 30 g, |
| | Acide acétique : | (54 + 5) ml soit 61,23 g, |
| | Anhydride acétique : | 54,99 ml soit 59,50 g, |
| | Catalyseur : | acide méthane sulfonique : 0,38 ml, soit 0,56 g, |
| | Masse totale : | 151,89 g |

En fin de réaction on obtient un DS de 3 et le brut réactionnel est constitué des produits suivants :

| | | |
|---|---|---|
| | Acétate d'amidon : | 53,33 g, |
| | Catalyseur : | acide méthane sulfonique : 0,56 g, |
| | Anhydride acétique : | 2,83 g, |
| | Acide acétique : | 95,16 g, |
| | Masse totale : | 151,89 g |

Le ratio de précipitation est de 1/10 soit 1519 g et le rendement de récupération est de 87%. On récupère donc 46,42 g (46,42/53,33*100 = 87) d'acétate d'amidon sec.

Le rejet principal est donc constitué d'un mélange contenant :

6,91 g d'acétate d'amidon non précipité, 0,56 g de catalyseur acide méthanesulfonique, 98,85 g d'acide acétique (l'anhydride acétique s'étant hydrolysé) et 1468,65 g d'eau.

L'effluent à retraiter à l'issue de ce procédé est de 1624,8 g et contient seulement 6 % d'acide acétique pour 46,42 g d'acétate d'amidon produit.

Exemple 2 : Préparation, par le procédé continu selon l'invention, d'acétate de maltodextrine de Dextrose Equivalent (DE) maximum 5 et base fécule de pomme de terre:

Première étape : Réaction

Dans un réacteur de 1m$^3$ double enveloppe muni d'un agitateur IKA turbotron RFG 06-A et d'un système condenseur à reflux total. Le condenseur ayant un fluide caloporteur régulé à 18°C.

On additionne à froid :

42,55 kg de maltodextrine base fécule de pomme de terre de DE maximum 5_à 6% d'humidité soit 40 kg sec
90 kg d'anhydride acétique
8 kg d'acétate de sodium

On met la consigne de régulation du chauffage à 80°C. Le milieu réactionnel est passé de 13°C à 81°C en 14 minutes puis est passé de 81°C à 135°C en 1 minute. La réaction s'est autoentretenue pendant 26 minutes. La température du brut réactionnel passant de 135°C à 131°C avant de chuter en 2 minutes de 131°C à 122°C et de se stabiliser.

Pendant la période de réaction, une forte ébullition du milieu réactionnel a eu lieu avec un flux important au niveau du condenseur.

Pendant cette étape réactionnelle, la suspension de maltodextrine dans l'anhydride acétique s'est transformée en une solution homogène d'acétate de maltodextrine base fécule de pomme de terre de DE maximum 5 dans l'acide acétique. Ledit acétate a été analysé à un DS de 3,0.

A la fin de cette étape nous avions 140,55 kg de brut réactionnel contenant 71 kg d'acétate de maltodextrine base fécule de pomme de terre de DE maximum 5.

Deuxième étape : Distillation en mode continu de l'acide acétique et récupération d'une poudre d'acétate de maltodextrine base fécule de pomme de terre de DE maximum 5

Cette étape s'effectue intégralement dans un réacteur malaxeur évaporateur LIST CRP 25 CONTI. Ce matériel est équipé :

• d'un circuit de mise sous pression réduite contrôlée munit d'un condenseur entre le LIST et la pompe à vide et d'un condenseur à la sortie de la pompe à vide. La tuyauterie entre le LIST et le condenseur est tracée électriquement à 120°C afin d'éviter toute condensation des vapeurs d'acide acétique et un retour d'acide acétique liquide vers le LIST.

• d'une ligne d'alimentation reliant le réacteur, ou s'est déroulé la première étape, au LIST. Cette ligne d'alimentation comprend une pompe volumétrique SEEPEX et une vanne flash situé au plus près du LIST. Toute la tuyauterie est tracée électriquement.

• de deux circuits de chauffe indépendants à huile de 36 kW chacun, régulant la température des 3 corps indépendants du LIST, des deux arbres rotatifs et du filtre de décolmatage. Tous les éléments chauffés peuvent être connectés indépendamment à l'un ou l'autre des circuits de chauffe

• d'un seuil de vidange par débordement permettant de sortir le produit, d'un bac de récupération de produit avec un système de sas permettant de vider le bac sans perturber le vide dans l'installation

L'acide acétique récupéré au niveau des condenseurs est envoyé dans une cuve munie d'un sas afin d'éviter de perturber le vide dans l'installation.

Les 2 circuits de chauffe sont réglés respectivement sur 130°C et 120°C, le premier corps où est flashé la solution d'acétate de maltodextrine est chauffé à 130°C, le reste de l'appareil est chauffé à 120°C.

La pression dans le circuit est régulée par la pompe à vide à 50 mbar. La vitesse de rotation de l'arbre rapide a été fixée à 20 tours par minutes.

La pompe d'alimentation alimente le LIST à travers la vanne flash sous un débit de 20 litres/heure et une pression de 4 Bar. La solution d'acétate de maltodextrine est maintenue à 80°C dans le réacteur et dans toute la ligne d'alimentation grâce au traçage électrique.

La solution d'acétate de maltodextrine est flashée dans le LIST et nous observons la formation de particules solides de taille de l'ordre quelques cm qui sont ensuite grossièrement broyés par la rotation des deux axes du LIST. La température du produit dans la première zone, zone où s'effectue le flashage, se stabilise autour de 75°C, vers 100°C dans la deuxième zone et vers 108°C dans la troisième zone.

La poudre est ensuite broyée et redispersée dans de l'eau à 35% de matière sèche pour ajuster le pH à l'aide d'une solution de soude puis filtrée et lavée par percolation pour éliminer le catalyseur et les traces d'acétate de sodium dans un filtre GUEDU avant d'être séché dans un séchoir GUEDU.

Le produit obtenu possède un DS de 3.0

Exemple 3 : Préparation d'amidon acétylé par le procédé selon l'invention en continu:

Le procédé se déroule en 2 étapes principales indépendantes

- Une étape réactionnelle dans un réacteur
- Une étape de distillation du solvant dans un réacteur malaxeur évaporateur L'étape réactionnelle peut se dérouler suivant plusieurs voies d'obtention d'acétate d'amidon. Les voies décrites ci-dessous ne sont pas exhaustives.

*Voie A :*

Dans un réacteur de 1000 litres utiles d'un diamètre de 950 mm, équipé d'un agitateur IKA TURBOTRON RGF 06-A de 4 kW et d'un condenseur, on fait réagir à pression atmosphérique :

- 100 kg sec de fécule de pomme de terre à 4 % d'humidité (4,17 kg d'eau)
- Anhydride acétique : 3 équivalents par rapport à la quantité d'amidon, soit 100 % molaire pour obtenir un DS théorique de 3 plus la quantité consommée par l'hydrolyse due à l'eau, soit: 188,89 kg + 23,61 kg, au total 212,5 kg
- Catalyseur : acide méthane sulfonique : 1,00 kg (17 % molaire)

La réaction est menée pendant 30 minutes à partir du moment où le brut réactionnel atteint la température de réaction de 120°C. La réaction est arrêtée par neutralisation du catalyseur avec 0,90 kg d'acétate de sodium.

Le brut réactionnel d'environ 260 litres obtenu contient 175,2 kg d'acétate d'amidon de DS égal à 2,90, 1,24 kg du sel de sodium de l'acide méthane sulfonique, un mélange d'acide acétique et d'anhydride acétique - une fraction d'acide acétique d'environ 10 % est récupérée au niveau du condenseur - et des traces d'acétate de sodium (excès de 5 % par rapport au catalyseur).

*Voie B :*

Dans un réacteur de 1000 litres utiles d'un diamètre de 950 mm, équipé d'un agitateur IKA TURBOTRON RGF 06-A de 4 kW et d'un condenseur en mode reflux total, on fait réagir à pression atmosphérique :

- 100 kg sec de fécule de pomme de terre à 4 % d'humidité (eau 4,17 kg)
- Anhydride acétique : 1,5 équivalent par rapport à la quantité d'amidon, soit 50 % de la quantité molaire pour obtenir un DS théorique de 3 plus la quantité consommée par l'hydrolyse due à l'eau, soit : 94,44 kg + 23,61 kg, au total 118,06 kg
- Acide acétique : 122,22 kg
- Catalyseur : acide méthane sulfonique : 1,00 kg

La réaction est menée pendant 30 minutes à partir du moment où le brut réactionnel atteint la température de réaction de 120°C. La réaction est arrêtée par neutralisation du catalyseur avec 0,90 kg d'acétate de sodium

Le brut réactionnel d'environ 300 litres obtenu contient 173,9 kg d'acétate d'amidon de DS égal à 2,90, 1,24 kg du sel de sodium de l'acide méthane sulfonique, de l'acide acétique et des traces d'acétate de sodium (excès de 5 % par rapport au catalyseur).

*Voie C :*

Dans un réacteur de 1000 litres utiles d'un diamètre de 950 mm, équipé d'un agitateur IKA TURBOTRON RGF 06-A de 4 kW et d'un condenseur en mode reflux total, on fait réagir à pression atmosphérique :

- 100 kg sec de fécule de pomme de terre à 4 % d'humidité (eau 4,17 kg)
- Anhydride acétique : 100 % molaire pour obtenir un DS théorique de 3 plus la quantité consommée par l'hydrolyse due à l'eau, soit : 188,89 kg + 23,61 kg, au total 212,5 kg
- Acide acétique : 172,22 kg
- Acétate de sodium : 15,00 kg

La réaction est menée pendant 7 heures à partir du moment où le brut réactionnel atteint la température d'ébullition, détecté par l'arrivée de vapeur au niveau du condenseur.

Le brut réactionnel d'environ 440 litres obtenu contient 168,7 kg d'acétate d'amidon de DS 2,65, 15 kg d'acétate de sodium et un mélange d'acide acétique et d'anhydride acétique.

*Distillation :*

L'étape de distillation se déroule dans un réacteur malaxeur évaporateur LIST CRP 25 continu. Le brut réactionnel provient d'une des voies A, B ou C décrites précédemment.

Les 2 circuits de chauffe du LIST sont réglés respectivement sur 130°C et 120°C, le premier corps où est flashé la solution d'acétate de fécule est chauffé à 130°C, le reste de l'appareil est chauffé à 120°C.

La pression dans le circuit est régulée par la pompe à vide à 50 mbar. La vitesse de rotation de l'arbre rapide a été fixée à 20 tours par minutes.

La pompe d'alimentation alimente le LIST à travers la vanne flash sous un débit de 20 litres/heure et une pression de 4 Bar. La solution d'acétate de fécule est maintenue à 120°C dans le réacteur et dans toute la ligne d'alimentation grâce au traçage électrique.

En fin de distillation, le produit est broyé grossièrement et sorti de l'appareil par un système de sas.

Le réacteur malaxeur évaporateur possède 2 zones de températures distinctes : la première, dans la zone d'alimentation et de distillation du réacteur, est relativement basse et doit se situer en dessous de la Tg (température de transition vitreuse) du produit, ce qui permet d'obtenir une poudre fragile mécaniquement et non pas un produit caoutchoutique très difficile, voire impossible, à travailler mécaniquement; la seconde, dans la zone de broyage et d'appauvrissement en solvant, doit être plus élevée, ce qui permet de continuer à appauvrir le milieu réactionnel solidifié en solvant.

Le produit à la sortie du réacteur malaxeur évaporateur contient l'intégralité de l'acétate d'amidon plus le catalyseur sous forme d'acétate de sodium et/ou de sel sodique de l'acide méthane sulfonique et des traces d'acide acétique et d'anhydride acétique.

Les étapes intermédiaires, avant récupération de la composition finale d'ester de matière amylacée, sont un broyage fin, un lavage dans un minimum d'eau afin d'atteindre les caractéristiques désirées de pureté et un séchage.

Exemple 4 : Solubilité des différents acétates de dérivés acétylés en solution à 10% dans l'acide acétique

Afin d'évaluer le DS seuil au-delà duquel les dérivés acétylés de matière amylacée sont solubles dans l'acide acétique, une prise d'essai de 1g de différents acétates de dérivés acétylés ont été mis en solution dans 9g d'acide acétique (solution à 10%) dans un tube à essai fermé. Le tube à assai a été placé dans une étuve à 100°C et a été agité manuellement et périodiquement durant 5 minutes. La solubilisation des dérivés acétylés a été évaluée selon que le mélange dérivés acétylés / acide acétique forme ou non une phase colle homogène.

| Produit | DS | Soluble |
|---|---|---|
| Acétate de fécule de pomme de terre | 0,7 | non |
| Acétate de fécule de pomme de terre | 0,8 | non |
| Acétate de fécule de pomme de terre | 0,9 | non |
| Acétate de fécule de pomme de terre | 1,4 | non |
| Acétate de fécule de pomme de terre | 1,5 | non |

(suite)

| Produit | DS | Soluble |
|---|---|---|
| Acétate de fécule de pomme de terre | 1,6 | oui |
| Acétate d'amidon de pois fluidifié | 1,7 | oui |
| Acétate de fécule de pomme de terre prégélatinisée et réticulée (taux de réticulation de 100) | 1,7 | oui |
| Acétate d'amidon de maïs waxy (DE 2) | 1,8 | oui |

Le DS seuil au-delà duquel les dérivés acétylés de matière amylacée sont solubles dans l'acide et/ou l'anhydride acétique correspond à un DS au moins supérieur à 1,6.

Exemple 5 : Caractéristiques de compositions solides de dérivés acétylés obtenues par le procédé selon l'invention

Différentes compositions obtenues selon le procédé de l'invention ont été caractérisées après avoir été lavées à l'eau.

Ces compositions ont été comparées aux poudres d'acétates d'amidon classiquement décrites : Starch acetate powders (AAPS PharmasciTech 2002; 3(4) article 34 (http://www.aapspharmascitech.org) Effects of Physical Properties of Starch Acetate Powders on Tableting).

| Base des dérives acétylés | DS | Densité Aérée | Densité Tassée | Ecoulement (secondes) | Surface Spécifique (m$^2$/g) |
|---|---|---|---|---|---|
| Maltodextrine de DE 1 issue de fécule de pomme de terre | 2,9 | 0,55 | 0,68 | 5-6 | 0,75 |
| Fécule de pomme de terre prégélatinisée et réticulée (taux de réticulation de 100) | 2,8 | 0,61 | 0,72 | 6-5 | 0,75 |
| Maltodextrine de DE 2 issue d'un amidon de maïs waxy | 2,7 | 0,65 | 0,79 | 5-6 | 0,40 |
| Fécule de pomme de terre | 2,7 | 0,63 | 0,79 | 4-4 | 0,30 |
| Starch acetate powders | | 0,29 - 0,44 | 0,39 - 0,56 | | 4,8 - 10,5 |

Les compositions obtenues par le procédé selon la présente invention présentent une densité aérée et une densité aérée bien supérieure à celles des poudres d'acétates d'amidon classiquement décrites. Les compositions de la présente invention présentent en outre une durée d'écoulement comprise entre 3 et 7 secondes. De plus, par rapport aux poudres d'acétates d'amidon classiquement décrites, les compositions selon la présente invention présentent une surface spécifique bien moindre, préférentiellement comprise entre 0,1 et 1,0 m$^2$/g, plus préférentiellement encore comprise entre 0,2 et 0,9 m$^2$/g.

Les compositions obtenues par le procédé selon l'invention ont également été caractérisées sur une coupe granulométrique desdites compositions (seule la fraction des compositions selon l'invention ayant une granulométrie comprise entre 100 et 500 $\mu$m a été retenue). Les résultats sur une telle coupe granulométrique sont les suivants :

| Base | DS | Densité Aérée | Densité Tassée | Tassement (%) | Angle de Talus (°) | Angle de Chute (°) |
|---|---|---|---|---|---|---|
| Maltodextrine de DE 1 issue de fécule de pomme de terre | 2,9 | 0,53 | 0,58 | 9,4 | 39-40 | 24-26 |
| Fécule de pomme de terre prégélatinisée et réticulée (taux de réticulation de 100) | 2,8 | 0,61 | 0,65 | 5,5 | 41-42 | 26-32 |
| Maltodextrine de DE 2 issue d'un amidon de maïs waxy | 2,7 | 0,58 | 0,64 | 8,9 | 38-39 | 29-29 |

(suite)

| Base | DS | Densité Aérée | Densité Tassée | Tassement (%) | Angle de Talus (°) | Angle de Chute (°) |
|---|---|---|---|---|---|---|
| Fécule de pomme de terre | 2,7 | 0,58 | 0,64 | 10,7 | 39-40 | 25-26 |

**Revendications**

1. Procédé continu de préparation d'une composition solide d'un dérivé acétylé de matière amylacée, ledit procédé comprenant :

   a) une étape de réaction d'acétylation de la matière amylacée par de l'anhydride acétique et/ou de l'acide acétique en présence d'un catalyseur pour obtenir un milieu réactionnel sous la forme d'une colle de matière amylacée acétylée, dans laquelle le catalyseur est l'acide méthane sulfonique ou l'acétate de sodium,
   b) une étape de neutralisation dudit catalyseur,
   c) une étape d'évaporation du milieu réactionnel en vue de solidifier ledit milieu réactionnel,
   d) une étape de récupération du milieu réactionnel ainsi appauvri en acide acétique et solidifié.

2. Procédé selon la revendication 1, comprenant au moins une étape intermédiaire entre les étapes c) et d) de broyage, de lavage et/ou de séchage, de la composition solide de matière amylacée acétylée résultant de l'étape c).

3. Procédé selon la revendication 1 ou 2, où l'étape a) est réalisée dans l'une des, de préférence toutes les, conditions suivantes :

   - en présence de n équivalents d'anhydride (ou d'acide) acétique par rapport à la quantité de matière amylacée, pour obtenir un DS compris entre 1,6 et 3 (bornes incluses) ;
   - en présence de 0,0002 à 0,50 équivalent molaire de catalyseur par rapport à la quantité de matière amylacée calculée en mole d'anhydroglucose;
   - à une température de consigne comprise entre 80 et 135°C, pour une réaction à pression atmosphérique ;
   - pendant une durée allant de 5 secondes à 10 heures à partir du moment où la température de consigne est atteinte.

4. Procédé selon la revendication 1 à 3, où l'étape b) est réalisée dans l'une des, de préférence toutes les, conditions suivantes :

   - en présence d'une quantité supérieure à 0,8, préférentiellement d'une quantité de 1,0 à 1,2, équivalent molaire de réactif de neutralisation par rapport à la quantité de catalyseur;
   - dans les mêmes conditions de température et de pression que l'étape a) ;
   - pendant une durée allant de 30 secondes à 10 heures à partir du moment où le réactif de neutralisation est ajouté.

5. Procédé selon l'une quelconque des revendications 1 à 4, où le milieu réactionnel soumis à l'étape c) se présente sous la forme d'une colle de matière amylacée acétylée présentant une proportion de matière sèche supérieure à 20 %, de préférence supérieure à 40 % en poids du mélange réactionnel total.

6. Procédé selon l'une quelconque des revendications 1 à 5, où l'étape c) est réalisée à une pression comprise entre 0,001 et 1 bar, de préférence comprise entre 0,01 et 0,5 bar et plus préférentiellement encore comprise entre 0,02 et 0,25 bar.

7. Procédé selon l'une quelconque des revendications 1 à 6, où l'étape c) est réalisée à une température comprise entre 20 et 140°C, préférentiellement entre 20 et 120°C.

8. Procédé selon l'une quelconque des revendications 1 à 7, où les étapes c) et d) et toute éventuelle étape intermédiaire de broyage sont menées dans la même enceinte.

9. Procédé selon l'une quelconque des revendications 1 à 8, où l'enceinte dans laquelle est menée l'étape c), éventuellement l'étape d) et/ou toute étape intermédiaire de broyage, est munie de moyens d'agitation à axe de rotation horizontal.

10. Procédé selon la revendication 9, où l'enceinte dans laquelle est menée l'étape c) est munie de moyens d'agitation conçus de manière à racler la paroi de ladite enceinte.

11. Procédé selon la revendication 9 ou 10, où l'enceinte dans laquelle est menée l'étape c) est une enceinte monoaxiale ou biaxiale munie de pales, notamment en forme de disques ou de socs de charrue, et d'éléments de mélange ou malaxage, notamment sous forme de barres.

12. Procédé selon l'une quelconque des revendications 1 à 11, où l'étape c), éventuellement l'étape d), est menée dans une enceinte biaxiale, notamment dans un malaxeur-réacteur biaxial co-rotatif.

13. Procédé selon l'une quelconque des revendications 1 à 12, où le dérivé acétylé de matière amylacée présente un degré de substitution en groupements acétyles (DS), compris entre 2,3 et 3.

14. Procédé selon la revendication 13, où le dérivé acétylé de matière amylacée présente un DS compris entre 2,5 et 3, de préférence compris entre 2,6 et 2,9.

15. Procédé selon l'une quelconque des revendications 1 à 14, où la composition solide d'un dérivé acétylé de matière amylacée issue de l'étape c) présente :

- une densité aérée supérieure à 0,4g/cm$^3$, de préférence supérieure à 0,45 g/cm$^3$ et/ou
- une densité tassée supérieure à 0,5 g/cm$^3$, de préférence supérieure à 0,55 g/cm$^3$.

**Patentansprüche**

1. Kontinuierliches Verfahren zur Herstellung einer festen Zusammensetzung eines Acetylderivats von stärkehaltigem Material, wobei das Verfahren umfasst:

a) einen Reaktionsschritt der Acetylierung des stärkehaltigen Materials mit Acetanhydrid und/oder Essigsäure in Gegenwart eines Katalysators, um ein Reaktionsmedium in Form eines Klebstoffs aus acetyliertem stärkehaltigen Material zu erhalten, wobei der Katalysator Methansulfonsäure oder Natriumacetat ist,
b) einen Schritt der Neutralisierung des Katalysators,
c) einen Schritt des Verdampfens des Reaktionsmediums, um das Reaktionsmedium zu verfestigen,
d) einen Schritt der Rückgewinnung des so an Essigsäure abgereicherten und verfestigten Reaktionsmediums.

2. Verfahren nach Anspruch 1, umfassend mindestens einen Zwischenschritt zwischen den Schritten c) und d) des Zerkleinerns, Waschens und/oder Trocknens der aus Schritt c) resultierenden festen Zusammensetzung aus acetyliertem stärkehaltigen Material.

3. Verfahren nach Anspruch 1 oder 2, wobei Schritt a) unter einer der folgenden Bedingungen, bevorzugt unter allen folgenden Bedingungen, durchgeführt wird:

- in Gegenwart von n Äquivalenten Acetanhydrid (oder -säure), bezogen auf die Menge an stärkehaltigem Material, um einen DS zwischen 1,6 und 3 (einschließlich der Grenzwerte) zu erhalten;
- in Gegenwart von 0,0002 bis 0,50 Moläquivalenten Katalysator, bezogen auf die Menge an stärkehaltigem Material, berechnet als Mol Anhydroglucose;
- bei einer Solltemperatur zwischen 80 und 135 °C für eine Reaktion bei Atmosphärendruck;
- für eine Dauer von 5 Sekunden bis 10 Stunden ab dem Zeitpunkt, an dem die Solltemperatur erreicht ist.

4. Verfahren nach den Ansprüchen 1 bis 3, wobei Schritt b) unter einer der folgenden Bedingungen, bevorzugt unter allen folgenden Bedingungen, durchgeführt wird:

- in Gegenwart einer Menge von mehr als 0,8, bevorzugt 1,0 bis 1,2, Moläquivalenten Neutralisationsreagenz, bezogen auf die Menge an Katalysator;
- unter denselben Temperatur- und Druckbedingungen wie in Schritt a);

- für eine Dauer von 30 Sekunden bis 10 Stunden ab dem Zeitpunkt, an dem das Neutralisationsreagenz zugegeben wird.

5. Verfahren nach einem der Ansprüche 1 bis 4, wobei das Reaktionsmedium in Schritt c) in Form eines acetylierten Stärkeklebstoffs mit einem Trockenmaterialanteil von mehr als 20 Gew.-%, bevorzugt mehr als 40 Gew.-%, der gesamten Reaktionsmischung vorliegt.

6. Verfahren nach einem der Ansprüche 1 bis 5, wobei Schritt c) bei einem Druck zwischen 0,001 und 1 bar, bevorzugt zwischen 0,01 und 0,5 bar und stärker bevorzugt zwischen 0,02 und 0,25 bar durchgeführt wird.

7. Verfahren nach einem der Ansprüche 1 bis 6, wobei Schritt c) bei einer Temperatur zwischen 20 und 140 °C, bevorzugt zwischen 20 und 120 °C, durchgeführt wird.

8. Verfahren nach einem der Ansprüche 1 bis 7, wobei die Schritte c) und d) sowie ein eventueller Zwischenschritt des Mahlens in derselben Kammer durchgeführt werden.

9. Verfahren nach einem der Ansprüche 1 bis 8, wobei die Kammer, in der Schritt c), gegebenenfalls Schritt d) und/oder ein Zwischenschritt des Mahlens durchgeführt wird, mit Rührmitteln mit horizontaler Drehachse versehen ist.

10. Verfahren nach Anspruch 9, wobei die Kammer, in der Schritt c) durchgeführt wird, mit Rührmitteln versehen ist, die dazu ausgebildet sind, die Wand der Kammer abzustreifen.

11. Verfahren nach Anspruch 9 oder 10, wobei die Kammer, in der Schritt c) durchgeführt wird, eine monoaxiale oder biaxiale Kammer ist, die mit Schaufeln, insbesondere in Form von Scheiben oder Pflugscharen, und mit Misch- oder Knetelementen, insbesondere in Form von Stangen, versehen ist.

12. Verfahren nach einem der Ansprüche 1 bis 11, wobei Schritt c), gegebenenfalls Schritt d), in einem biaxialen Gehäuse, insbesondere in einem koaxialen Rotationsmischer und -reaktor, durchgeführt wird.

13. Verfahren nach einem der Ansprüche 1 bis 12, wobei das Acetylderivat des stärkehaltigen Materials einen Substitutionsgrad an Acetylgruppen (DS) zwischen 2,3 und 3 aufweist.

14. Verfahren nach Anspruch 13, wobei das Acetylderivat des stärkehaltigen Materials einen DS zwischen 2,5 und 3, bevorzugt zwischen 2,6 und 2,9, aufweist.

15. Verfahren nach einem der Ansprüche 1 bis 14, wobei die feste Zusammensetzung eines Acetylderivats des stärkehaltigen Materials aus Schritt c) aufweist:

- eine Luftdichte von mehr als 0,4 g/cm$^3$, bevorzugt mehr als 0,45 g/ cm$^3$, und/oder
- eine Schüttdichte von mehr als 0,5 g/ cm$^3$, bevorzugt mehr als 0,55 g/ cm$^3$.

**Claims**

1. Continuous method for preparing a solid composition of an acetylated derivative of amylaceous material, said method comprising:

    a) a step of acetylation reaction of the amylaceous material with acetic anhydride and/or acetic acid in the presence of a catalyst to obtain a reaction medium in the form of an adhesive of acetylated amylaceous material, in which the catalyst is methanesulfonic acid or sodium acetate,
    b) a step of neutralising said catalyst,
    c) a step of evaporating the reaction medium in order to solidify said reaction medium;
    d) a step of recovering the reaction medium thus depleted of acetic acid and solidified.

2. Method according to claim 1, comprising at least one intermediate step between steps c) and d) of milling, washing and/or drying the solid composition of acetylated amylaceous material resulting from step c).

3. Method according to claim 1 or 2, where step a) is performed in one of, preferably all of, the following conditions:

- in the presence of n equivalents of acetic anhydride (or acid) relative to the amount of amylaceous material, so as to obtain a degree of substitution (DS) of between 1.6 and 3 (inclusive of limits);
- in the presence of from 0.0002 to 0.50 molar equivalent of catalyst relative to the amount of amylaceous material calculated in moles of anhydroglucose;
- at a setpoint temperature of between 80 and 135°C, for a reaction at atmospheric pressure;
- for a period ranging from 5 seconds to 10 hours from the moment when the setpoint temperature is reached.

4. Method according to claim 1 to 3, where step b) is carried out under at least one, preferably all, of the following conditions:

- in the presence of an amount greater than 0.8, preferably an amount of 1.0 to 1.2, molar equivalent of neutralisation reagent, relative to the amount of catalyst;
- under the same temperature and pressure conditions as step a);
- for a period ranging from 30 seconds to 10 hours from the moment the neutralisation reagent is added.

5. Method according to any of claims 1 to 4, wherein the reaction medium subjected to step c) is in the form of an adhesive of acetylated amylaceous material having a proportion of dry matter greater than 20%, preferably greater than 40% by weight of the total reaction mixture.

6. Method according to any of claims 1 to 5, wherein step c) is carried out at a pressure of between 0.001 and 1 bar, preferably between 0.01 and 0.5 bar and even more preferably between 0.02 and 0.25 bar.

7. Method according to any of claims 1 to 6, wherein step c) is carried out at a temperature of between 20 and 140°C, preferably between 20 and 120°C.

8. Method according to any of claims 1 to 7, wherein steps c) and d) and any optional intermediate milling step are carried out in the same chamber.

9. Method according to any of claims 1 to 8, wherein the chamber in which step c), optionally step d) and/or any intermediate milling step is carried out is fitted with stirring means that have a horizontal rotational axis.

10. Method according to claim 9, wherein the chamber in which step c) is carried out is fitted with stirring means that are designed so as to scrape the wall of said chamber.

11. Method according to claim 9 or 10, wherein the chamber in which step c) is carried out is a uniaxial or biaxial chamber fitted with blades, in particular in the form of discs or ploughshares and with mixing or blending components, in particular in the form of bars.

12. Method according to any of claims 1 to 11, wherein step c) and optionally step d) is carried out in a biaxial chamber, in particular in a biaxial co-rotating mixer-reactor.

13. Method according to any of claims 1 to 12, wherein the acetylated derivative of amylaceous material has a degree of substitution (DS) with acetyl groups of between 2.3 and 3.

14. Method according to claim 13, wherein the acetylated derivative of amylaceous material has a DS of between 2.5 and 3, preferably between 2.6 and 2.9.

15. Method according to any of claims 1 to 14, wherein the solid composition of an acetylated derivative of amylaceous material resulting from step c) has:

- an aerated density of greater than 0.4 $g/cm^3$, preferably greater than 0.45 $g/cm^3$ and/or
- a packed density of greater than 0.5 $g/cm^3$, preferably greater than 0.55 $g/cm^3$.

## RÉFÉRENCES CITÉES DANS LA DESCRIPTION

**Documents brevets cités dans la description**

- US 4501888 A
- WO 2004104048 A
- WO 2007065681 A
- US 2362282 A
- WO 9702018 A
- WO 9703121 A
- US 6039469 A
- US 20040114460 A
- US 20040145964 A
- US 20060193197 A
- EP 1127609 A
- WO 9726281 A

**Littérature non-brevet citée dans la description**

- **G. DELAPLACE ; R. GUÉRIN.** Mélange des produits pâteux-Caractéristiques d'un système agité. *Techniques de l'Ingénieur,* Mars 2006, F3350
- Mixing of Highly Viscous Media. **D. B. TODD.** Ullmann's Encyclopedia of Industrial Chemistry. 2003, 189-205
- **S. BRUNAUER et al.** BET Surface Area by Nitrogen Absorption. *Journal of American Chemical Society,* 1938, vol. 60, 309
- Pharmacopée Européeenne. vol. 1, 257-258
- *AAPS PharmasciTech,* 2002, vol. 3 (4, http://www.aapspharmascitech.org